# EUROPEAN PATENT APPLICATION

(11) **EP 1 819 126 A1**
(43) Date of publication of application: **15.08.2007**
(21) Application number: 07001843.7
(22) Date of filing: 29.01.2007
(51) Int. Cl.: H04L 29/06, H04L 12/24

(54) **Bi-planar network architecture**

(30) Priority: 10.02.2006 US 772152 P; 15.02.2006 US 773437 P
(71) Applicant: 3Com Corporation, Marlborough, MA 01752-3064 (US)
(72) Inventor: Willebeek-Lemair, Marc, Austin, Texas 78730 (US); Smith, Brian C., Fort Worth, Texas 76109 (US)
(74) Representative: Horton, Andrew Robert Grant

(57) **Abstract**

An electronic communication network includes a connectivity plane (110b) and a control plane (120). The control plane includes at least one control node (180a) for inspecting packets received by the control plane. The control plane is configured to perform network traffic control functions on the packets received by the control node before transmitting the packets to any other node in the network. The network traffic control functions include one or more of access control, attack control, and application traffic control.

## Description

The present invention relates to electronic communication networks and, more particularly, to techniques for performing access control, attack control, and application control in packet-switched networks.

Electronic communication networks based on the Internet Protocol (IP) have become ubiquitous. Although the primary focus of the information technology (IT) industry over the last two decades has been to achieve "anytime, anywhere" IP network connectivity, that problem has, to a large extent, been solved. Individuals can now use a wide variety of devices connected to a combination of public and private networks to communicate with each other and use applications within and between private enterprises, government agencies, public spaces (such as coffee shops and airports), and even private residences. A corporate executive can now reliably send an email message wirelessly using a handheld device at a restaurant to a schoolteacher using a desktop computer connected to the Internet by a wired telephone line halfway around the world.

In other words, virtually any IP-enabled device today can communicate with any other IP-enabled device at any time. Advances in the resiliency, reliability, and speed of IP connections have been made possible by improvements to the traditional routers and switches that form the "connectivity plane" of IP networks. Such "IP connectivity" networks have propelled business productivity enormously the world over.

Because the problem of IP connectivity has largely been solved, the enterprise network industry now faces an important inflection point. Some IP networks today include not only switches and routers, but also a host of point solution appliances (sometimes called "bumps in the wire") which have been added to the network over time in attempts to perform functions that the switches and routers themselves were not responsible for performing. In other cases, these additional functions have been "bolted on" to the switches and routers themselves. These additional control functions, whether installed as separate appliances or as "bolt-ons," have been used; for example, to act as network access firewalls, to perform intrusion detection and prevention, and to enforce policy-based application bandwidth control. Although these control functions often work relatively well for their individual intended purposes, their introduction (whether in the form of point solution appliances or bolt-ons to switches and routers) has led to high-cost, difficult-to-manage network environments.

The problems addressed, however inadequately, by such added control functions are only growing in scope and complexity. One of the greatest strengths of IP networks - their openness - is now exposing enterprise networks to constant infrastructure and information security threats. These threats can lead to catastrophic business downtime and even legal liability for invasion of privacy.

Furthermore, although IP networks originally only carried data traffic, such networks are increasingly relied upon also to carry traffic for mission-critical business applications, voice, and video. Each of these kinds of traffic has its own performance requirements. Combining these multiple kinds of traffic into a single IP network is leading to application performance issues that the connectivity plane (e.g., switches and routers) was not designed to address: For example, conventional connectivity networks were not designed to provide the quality of service (QoS), authentication, encryption, and threat management needed for these new business-critical functions. As an example, conventional connectivity networks typically lack the ability to maintain the high QoS required by voice traffic in the face of bursts of data traffic on the same network.

Furthermore, the cost of network downtime has skyrocketed. When businesses relied on their IP networks only for data traffic, and when such data traffic was required for only a small portion of the business' activities, the cost of having an email server down for an hour was relatively low. Now that voice, data, video, application and other traffic are combined onto the same network, and now that an increasingly large percentage of business functions rely on such traffic, the cost of network downtime is significantly higher. In essence, when the network stops, the business stops, leading to lost productivity, lost revenue, and customer dissatisfaction.

Enterprise executives understand this reality. From a technical perspective, CIOs know that the current connectivity network cannot resolve security and application performance issues. In turn, from a financial perspective, CFOs are concerned that it will be too expensive to solve these problems by performing a "forklift upgrade" - replacing the entire connectivity plane with new hardware. Finally, from an overall business perspective, CEOs cannot tolerate network security downtime risk, and are demanding predictable, stable application performance.

Consider some of the problems of conventional connectivity networks in more detail. A bare IP network typically does not perform any kind of "access control" - controlling which users and devices can access the network. In general, access control policies define which traffic is allowed onto the network based on the identity of the user and/or device transmitting the traffic. One solution to this problem has been to use firewalls to establish a network "perimeter" defining which users and devices are "inside" - and therefore authorized to access the network - and which users and devices are "outside" - and therefore prohibited from accessing the network. The concept of a clear network perimeter made sense when all users accessed the network from fixed devices (such as desktop computers) that were physically located within and wired to the network. Now, however, users access the network from a variety of devices - including laptops, cell phones, and PDAs - using both wired and wireless connections, and from a variety of locations inside and outside the physical plant of the enterprise. As a result, the perimeter has blurred, thereby limiting the utility of firewalls and other systems which are premised on a clear inside-outside distinction.

A bare IP network also does not perform any kind of "attack control" - protecting the network against viruses, worms, and other malicious network activity. In general; attack control policies define criteria for identifying traffic as malicious, and the actions to be applied to such malicious traffic (such as excluding it from the network). Today's networks are constantly under attack, both by directed and non-directed attacks.

Furthermore, the attacks continually evolve, often making yesterday's defences obsolete. Moreover, network vulnerabilities often are discovered and exploited more quickly today than in the past, as a result of increased availability of turnkey attack tools that automatically search for and attack weak points in the network.

The typical cost of a successful attack is higher today than in the past because of the increased value of information stored on modern networks. The same use of the network to connect a larger number and wider variety of devices that leads to problems for traditional access control mechanisms has also spurred the use of the network to store increasingly high-value information. Anyone who has attempted to store copies of the same data on a desktop computer, laptop computer, PDA, and cell phone, and to synchronize that data across all of the devices, knows that storing data at the edge of the network can be inefficient. This has led to a movement of data back toward a centralized depository. Although such centralization can lead to increased efficiency, it also serves as a tempting lure for high-value attacks on the network.

Furthermore, a bare IP network does not perform any kind of "application control". In general, application control policies define how traffic within the network is handled, based on the application transmitting the traffic. Traditional routers and switches route packets without any knowledge of the applications transmitting or receiving those packets. Application control is critical, however, in the context of modern IP networks in which applications are consolidated into a single IP infrastructure, and in which mission-critical data applications and non-critical applications compete with each other for network bandwidth.

For example, the telephone network traditionally has been a physically separate network from the data network. As the telephone network converges with the data network, businesses gain tremendous advantages in both cost and the ability to deploy new voice services. But they do so at the risk of exposing telephony, an application of extremely high availability expectation, to the perils of the IP environment. As mentioned above, the result is that voice-over-IP (VoIP) tends to work well in a lightly-loaded customer network - until traffic surges or the network comes under attack. The challenge is to imbue telephony with the benefits of IP networks without sacrificing quality of service.

Unproductive network traffic has also increased due to the emergence of bandwidth-consuming peer-to-peer applications, such as Bit Torrent, Kazaa, and Gnutella. Furthermore, as new devices connect to the network, bandwidth increases accordingly, as well as the probability of a malfunctioning device flooding the network with garbage traffic. Conventional connectivity networks, which do not distinguish between packets delivered by or transmitted to different applications, are unequipped to address these problems.

In short, improved techniques are needed for performing network access control, attack control, and application control.

The invention is defined in the independent claims

One aspect of the present invention concerns a method of consolidating control in an electronic communication network. The method includes: (A) deploying at least one control node in the network, the at least one control node comprising means for inspecting packets received by the control node; and (B) configuring the at least one control node to perform network traffic control functions on the packets received by the at least one control node before transmitting the packets to any other node in the network. The network traffic control functions may, for example, include network access control and either: (1) application control, (2) attack control, or (3) both application traffic control and attack control.

Another aspect of the present invention concerns a method for use with an electronic communication network, the method comprising: (A) receiving a packet at a control node in the network; and (B) at the control node, performing network traffic control functions on the packet received by the control node without transmitting the packet to any other node in the network. The network traffic control functions may, for example, include network access control and either: (1) application traffic control, (2) attack control, or (3) both application traffic control and attack control.

Yet another aspect of the present invention concerns an electronic communication network comprising: a first node and a control node. The control node comprises: means for inspecting network traffic received by the control node; and means for performing network traffic control functions on the network traffic received by the control node before transmitting the network traffic to the first node. The network traffic control functions may, for example, include network access control and either: (1) application traffic control, (2) attack control, or (3) both application traffic control and attack control.

A further aspect of the present invention concerns a network control device suitable for installation in an electronic communication network comprising a plurality of network nodes communicatively linked by at least one network interconnect device. The network control device comprises, in a unitary assemblage: (a) input/output means for communicatively linking the network control device to said electronic communication network; (b) a power supply means for supplying power to the network control device; and (c) logic and processing circuitry configurable to perform network traffic control functions on traffic flowing into the network control device through the input/output means. The network traffic control functions may, for example, include network access control and either: (1) application traffic control, (2) attack control, or (3) both application traffic control and attack control.

Yet a further aspect t of the present invention is concerns an electronic communication network comprising: a plurality of network nodes communicatively linked by at least one network interconnect device; at least one control node; and means for performing a plurality of network traffic control functions on the received network traffic. Each control node comprises: means for receiving network traffic from the at least one network interconnect device; and means for inspecting the received network traffic. The plurality of network traffic control functions may, for example, include at least two of network access control, application traffic control, and attack control. The plurality of network traffic control functions is performed substantially exclusively by said at least one control node throughout said electronic communication network.

Another aspect of the present invention concerns an electronic communication network comprising: a connectivity plane comprising at least one network interconnect device; and a control plane comprising at least one control node. The electronic communication network is configured to perform a plurality of network traffic control functions substantially exclusively in said control plane on network traffic flowing into said control plane from at least one network interconnect device.

The plurality of network traffic control functions may, for example, include at least two of network access control, application traffic control, and attack control.

Yet another aspect t of the present invention concerns a method for use with an electronic communication network. The network includes a connectivity plane. The method includes: (A) installing a control plane in the network; and (B) configuring the control plane to perform a plurality of network traffic control functions on network traffic received by the control plane. The plurality of network traffic control functions may, for example, include at least two of network access control, application traffic control, and attack control. (A) and (B) may, for example, be performed without modifying the connectivity plane; be performed without disabling network interconnect devices in the connectivity plane; and include configuring a subset of the network interconnect devices in the connectivity plane not to perform the plurality of network traffic control functions.

Yet a further aspect t of the present invention is concerns a method for use with an electronic communication network. The network comprises a connectivity plane configured to perform a first plurality of network traffic control functions. The method comprises: (A) installing a control plane in the network; (B) configuring the control plane to perform a second plurality of network traffic control functions on network traffic received by the control plane; and (C) configuring the connectivity plane not to perform the second plurality of network traffic control functions. The second plurality of network traffic control functions may, for example, include at least two of network access control, application traffic control, and attack control.

Another aspect t of fhe present invention concerns a method for use with an electronic communication network. The network comprises a connectivity plane. The method comprises: (A) installing a control plane in the network; and (B) configuring the control plane to perform, substantially exclusively throughout the electronic communication network, a plurality of network traffic control functions on network traffic received by the control plane. The plurality of network traffic control functions may, for example, include at least two of network access control, application traffic control, and attack control.

Yet another aspect of the present invention concerns a method for use with an electronic communication network. The network comprises a connectivity plane and a control plane. The method comprises: (A) establishing a secure management connection in the network with the control plane; and (B) configuring, over the secure management connection, the control plane to perform, substantially exclusively throughout the electronic communication network, a plurality of network traffic control functions on network traffic received by the control plane. The plurality of network traffic control functions may, for example, include at least two of network access control, application traffic control, and attack control.

Other features and advantages of the present invention will become apparent from the following description and from the claims.

### Brief Description of the Drawings

FIG. 1A is a high-level functional diagram of a prior art electronic communication network;
FIG. 1B is a high-level functional diagram of an electronic communication network according to one embodiment of the present invention;
FIG. 1C is a diagram illustrating use of a control plane to perform network traffic control functions according to one embodiment of the present invention;
FIG. 1D is a diagram illustrating a control plane according to one embodiment of the present invention;
FIG. 2 is a flowchart of a method for consolidating control in the electronic communications network of FIG. 1A according to one embodiment of the present invention;
FIG. 3 is a flowchart of a method for using a control plane to perform network traffic control functions according to one embodiment of the present invention;
FIG. 4. is a flowchart of a method for configuring a control plane to perform network traffic control functions according to one embodiment of the present invention; and
FIG. 5 is a flowchart of a method for configuring a control plane over a secure management connection according to one embodiment of the present invention

### Detailed Description

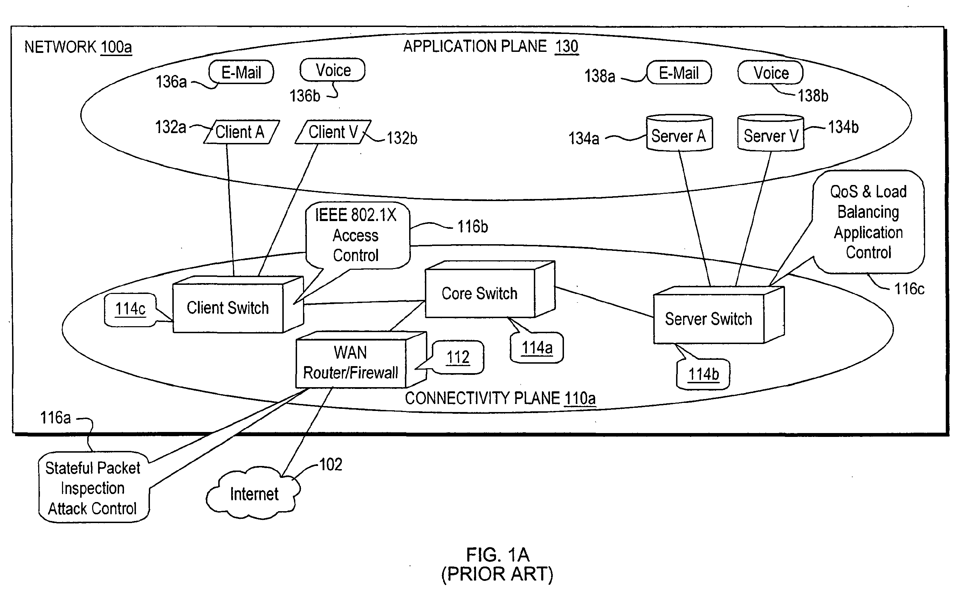

Referring to FIG. 1A, a high-level functional diagram is shown of a prior art electronic communication network 100a. The network 100a includes a connectivity plane 110 and an application plane 130. The connectivity plane 110 and application plane 130 may be of various types well-known to those having ordinary skill in the art. The connectivity plane 110 may, for example, include conventional routers 112 and switches 114, such as link layer (layer 2) and/or network layer (layer 3) switches. The application plane 130 may include, for example, web, email, and voice applications.

More specifically, in the example illustrated in FIG. 1A, the application plane 130 includes two clients 132a-b and two servers 134a-b. Client 132a is an email client which handles email data 136a, while Client 132b is a voice application which handles voice data 136b. Similarly, Server 134a is an email server which serves email data 138a, while Server 134b is a voice server which serves voice data 138b.

The connectivity plane 110a includes three switches 114a-c (referred to collectively as switches 114 herein), including a core switch 114a, a server switch 114b, and a client switch 114c. The client switch 114c is connected to clients 132a and 132b. Client 132a sends and receives email traffic through the client switch 114c, while client 132b sends and receives voice traffic through the client switch 114c. Client switch 114c is illustrated as having an IEEE 802.1X access control function 116b "bolted on" to the switch 114c. IEEE 802. 1X is a standard for providing port-based network access control, which requires clients to authenticate themselves before being allowed to access the network. The client switch 114c, therefore, is capable of performing access control on traffic passing through the switch 114c.

The server switch 114b is connected to servers 134a and 134b. Server 134a sends and receives email traffic through the server switch 114b, while server 134b sends and receives voice traffic through the server switch 114b. Server switch 114b is illustrated as having a QoS and load balancing function "bolted on" to the switch 114b. The server switch 114b, therefore, is capable of performing QoS and load balancing (examples of application control) on traffic passing through the switch 114b.

In the example illustrated in FIG. 1A, the router 112 also performs the function of a firewall against incoming traffic from the Internet 102. Furthermore, the router 112 is illustrated as having a stateful packet inspection function 116a "bolted on" to the router 112. The router 112, therefore, is capable of performing stateful packet inspection on traffic passing between the network 100a and the Internet 102, thereby performing a kind of attack control.

The core switch 114a is coupled between the client switch 114c, server switch 114b, and router 112. The core switch 114a acts as an interconnect point to coordinate communication among the client switch 114c, server switch 114b, and router 112.

As described above, although the control functions implemented in bolt-ons 116a-c may work relatively well for their individual intended purposes, in general they significantly increase the cost of the network 100a and the difficulty of managing the network 100a.

Various embodiments of the present invention address these and other problems by implementing some or all of the control functions in a separate control plane 120.

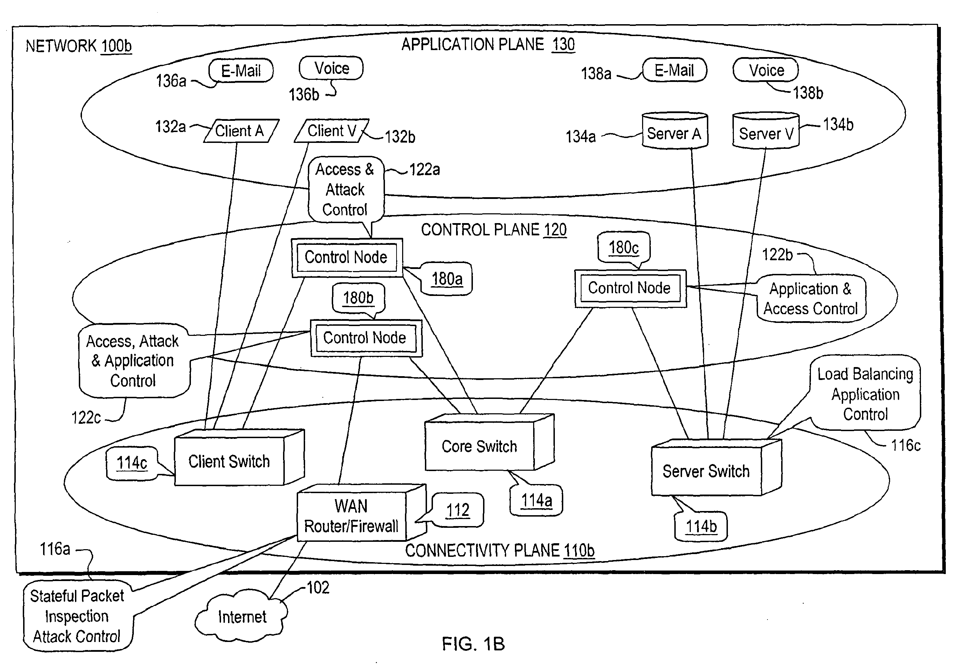

Referring to FIG. 1B, for example, a high-level functional diagram is shown of an electronic communication network 100b according to one embodiment of the present invention. The network 100b is similar to the network 100a shown in FIG. 1A in some respects. For example, the network 100b includes a connectivity plane 110b and the application plane 130. In addition, however, the network 100b includes a control plane 120 logically interposed between the connectivity plane 110a and the application plane 130 of FIG. 1A. The control plane 120 may be installed between the connectivity plane 110a and the application plane 130 without requiring significant modification to the connectivity plane 110a or the application plane 130.

The control plane 120 may substantially or entirely consolidate the control functions of the network 100b, including control functions performed by the connectivity plane 110a in the network 100a of FIG. 1A (i.e., before installation of the control plane 120). For example, the control plane 120 includes control nodes 180a-c, each of which may perform any combination of access control, attack control, and application control. In the particular example illustrated in FIG. 1B, control node 180a includes a subsystem 122a for performing both access and attack control 122a, control node 180b includes a subsystem 122b for performing both access and application control, and control node 180c includes a subsystem 122c for performing access, attack, and application control. Although three control nodes 180a-c are shown in FIG. 1B for purposes of example, the control plane 120 may include any number of control nodes.

Concomitantly, some of these control functions have been removed from the connectivity plane 110a to form connectivity plane 110b. In particular, the access control function (implemented in IEEE 802.1X access control subsystem 116b in FIG. 1A) has been removed from the client switch 114c, and the QoS functionality has been removed from subsystem 116c to produce subsystem 116c', which only performs load balancing. In other words, some of the control functions have been migrated from bolt-ons to the switches 114a-c and router 112 in the connectivity plane 110a to control nodes 180a-c in the control plane 120. The particular control functions that have been migrated to the control plane 120 in FIG. 1B are merely examples and do not constitute limitations of the present invention. Instead, any combination of control functions may be implemented in the control plane 120 and/or removed from the connectivity plane 110a. In one embodiment, substantially all control functions are removed from the connectivity plane 110a and implemented in the control plane 120, thereby substantially consolidating the control functions in the control plane 120.

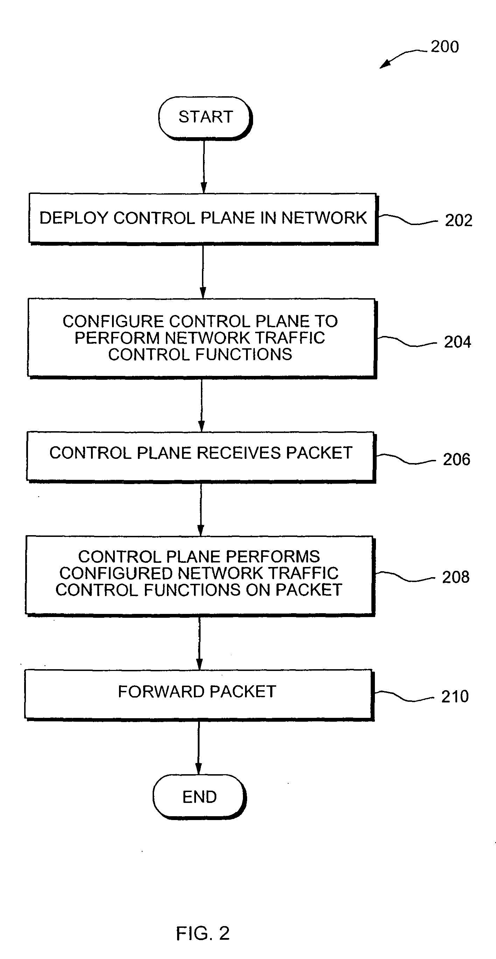

For example, referring to FIG. 2, a flowchart is shown of a method 200 for consolidating control in the electronic communications network 100a of FIG. 1A. The control plane 120 is deployed in the network 100a of FIG. 1A, thereby producing the network 100b of FIG. 1B (step 202). The control plane 120 may include at least one control node (e.g., any one or more of the control nodes 180a-c) including means for inspecting packets received by the control node(s).

The control plane 120 is configured to perform network traffic control functions on the packets received by the control nodes 180a-c before transmitting the packets to any other node in the network 100b (step 204). The set of network traffic control functions that the control plane 120 is configured to perform will be referred to herein as "the configured network traffic control functions." The configured network traffic control functions may include any combination of access control, attack control, and application control.

The control plane 120 may, for example, be configured (in step 204) to perform the network traffic control functions substantially exclusively within the network 100b. The connectivity plane 110b may, for example, include one or more network interconnect devices (such as one or more of the routers 112 and switches 114a-c) which are configured to perform the configured network traffic control functions in the network 100a of FIG. 1A. When the control plane 120 is deployed, however, step 204 may involve configuring the network interconnect devices in the connectivity plane 110b not to perform the configured network traffic control functions.

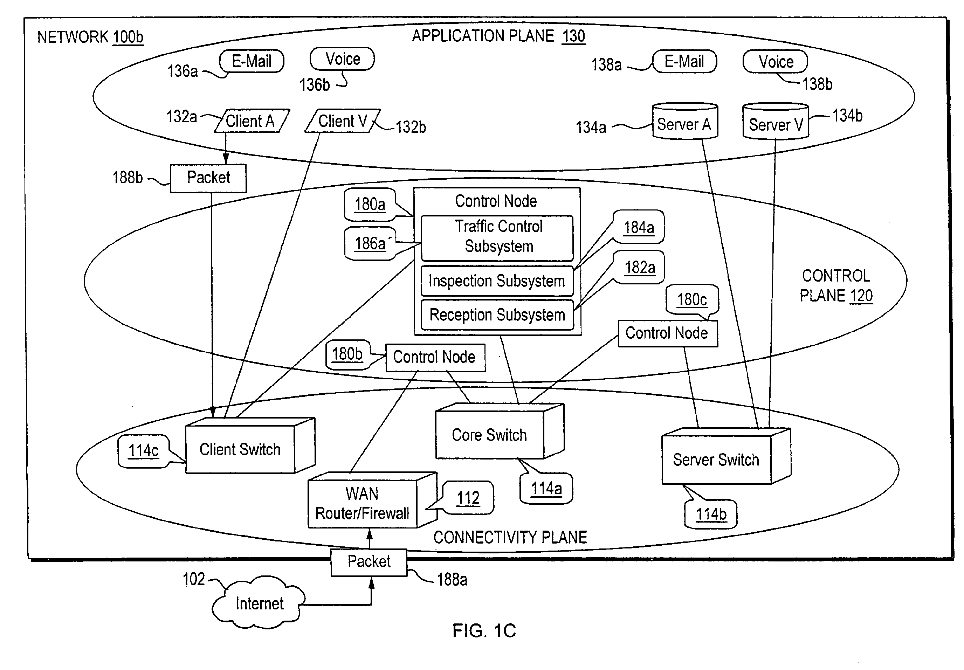

Once the control plane 120 has been deployed in the network 100b, the control plane 120 may perform the network traffic control functions which it has been configured to perform. For example, referring to FIG. 1C, a diagram is shown which illustrates use of the control plane 120 to perform the configured network traffic control functions on packets 188a-b received by the control plane 120.

FIG. 1C illustrates the same network 100b as FIG. 1B, except that elements 116a, 116c', and 122a-c have been omitted to simplify the drawing, and that internal subsystems 182a, 184a, and 186a of one of the control nodes 180a are shown. Although the other control nodes 180b and 180c may include subsystems similar to that of control node 180a, such subsystems are not shown in FIG. 1C for ease of illustration.

More specifically, the control nodes 180a-c may include reception subsystems (such as reception subsystem 182a) for receiving network traffic from network interconnect devices (such as the router 112 and switches 114 in the connectivity plane 110); inspection subsystems (such as inspection subsystem 184a) for inspecting the received network traffic, and network traffic control subsystems (such as network traffic control subsystem 186a) for performing a plurality of network traffic control functions on the received network traffic. The network traffic control subsystem 186a may implement some or all of the access and attack control subsystem 122a shown in FIG. 1A.

The control plane 120 receives a packet (FIG. 2, step 206). The packet may, for example, be received by one of the control nodes 180a-c in the control plane 120. The packet may, for example, be a packet 188a received from outside the network 100b, or a packet 188b received inside the network 100b. For example, when a user uses email client 132a to send and receive email, packet 188a may be a packet of email received by the client 132a, while packet 188b may be a packet of email sent by the client 132a. Reference numeral 188 will be used generally herein to refer to packets 188a and 188b.

In the embodiment illustrated in FIG. 1C, all incoming and outgoing packets are processed by one of the control nodes 180a-c. For example, the packet 188a is received from the Internet 102 at router 112, which transmits the packet to control node 180b. Packet 188b is transmitted by the client 132a to client switch 114c, which in turn transmits the packet 188b to control node 180a. All other incoming and outgoing packets are similarly directed through control nodes 180a-c.

Returning to FIG. 2, the control plane 120 performs the configured network traffic control functions on the packet 188 (step 208). The control plane 120 may, for example, perform the configured network traffic control functions on the packet 188 without transmitting the packet 188 to any other node inside or outside of the network 100b. For example, the control plane 120 may perform access, attack, and/or application control on the packet 188 solely using one of the control nodes 180a-c: For example, if the packet 188 is routed through control node 180a, the control plane 120 may perform access and attack control on the packet 188 solely using the access and attack control subsystem 122a of control node 180a.

The control plane 120 may then forward the packet 188 (step 210), assuming for purposes of the present example that none of the network traffic control functions performed in step 208 dictate that the packet 188 should not be so forwarded. For example; in the case of packet 188a, the control node 180b may forward the packet 188a to the core switch 114a. Similarly, in the case of packet 188b, the control node 180a may forward the packet 188b to the core switch 114a. In this way, the packet 188 is only forwarded to other nodes after the control plane 120 has performed the configured network traffic control functions on the packet 188.

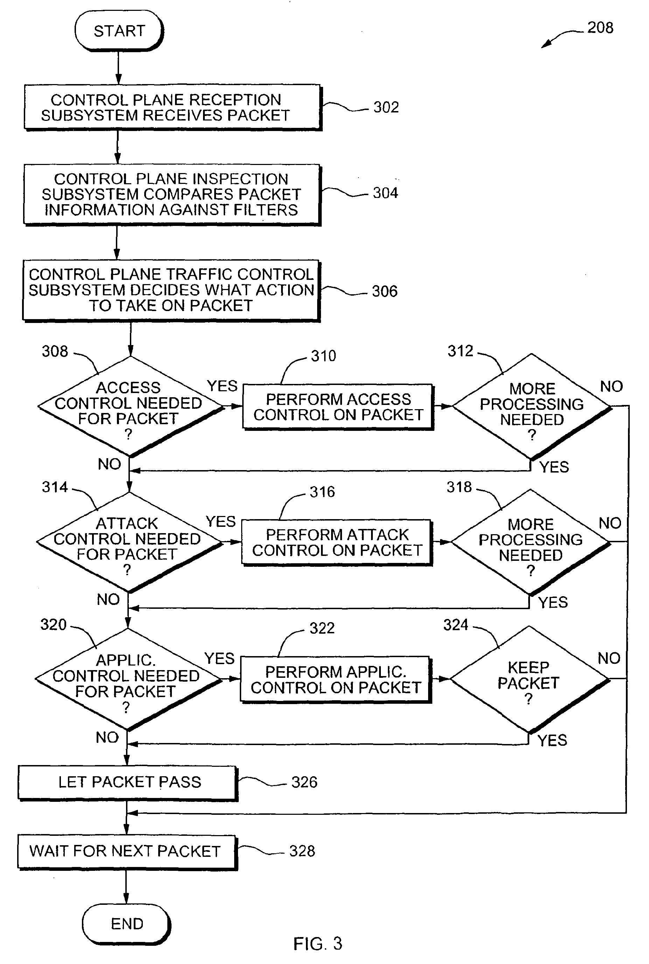

Referring to FIG. 3, a flowchart is shown of a method that may be used by the control plane 120 to perform network traffic control functions (such as the configured network traffic control functions) according to one embodiment of the present invention. The control plane 120 receives packet 188 (step 302). The packet 188 may, for example, be received by reception subsystem 182a of control node 180a.

The control plane 120 compares information in the packet 188 against predefined filters (step 304). The filter comparison may be performed, for example, by the inspection subsystem 184a of control node 180a. The control plane 120 determines which action(s) to take based on the comparison performed in step 304 (step 306). The determination may be made, for example, by the traffic control subsystem 186a of the control node 180a.

If it is determined in step 306 that access control is to be performed on the packet 188 (step 308), then the control plane 120 performs access control on the packet 188 (step 310). Access control may be performed, for example, by the traffic control subsystem 186a of the control node 180a. Access control includes, for example, granting; auditing, and revoking of access to the network 100b and resources connected to the network 100b based upon which device is attempting to connect to the network 100b, the health of that device, which user is using the device, and which access rights that user has: As described in more detail below, the control plane 120 may provide a uniform and consistent framework to grant or revoke access by all clients, whether wired, wireless, local, or remote, with or without requiring client agent software. Access to the network 100b and/or specific resources (e.g., servers, applications, files) may optionally be audited, encrypted, or require 2-factor authentication.

If no additional processing is needed on the packet 188 after access control is performed (step 312), the method terminates, the packet 188 is not forwarded to any other nodes in the network 100b, and the method waits for the next packet (step 328). One situation in which additional processing may not be needed is that in which the packet 188 has failed to satisfy the requirements of access control. Alternatively, for example, packets that fail to satisfy access control requirements may be restricted to a subset of the network 100b, such as a visitor's virtual LAN (VLAN). Other action may also be taken if access control requirements are not satisfied. For example, packets from unauthorized users and/or devices may be quarantined, and a notification of unauthorized access may be provided to a system administrator.

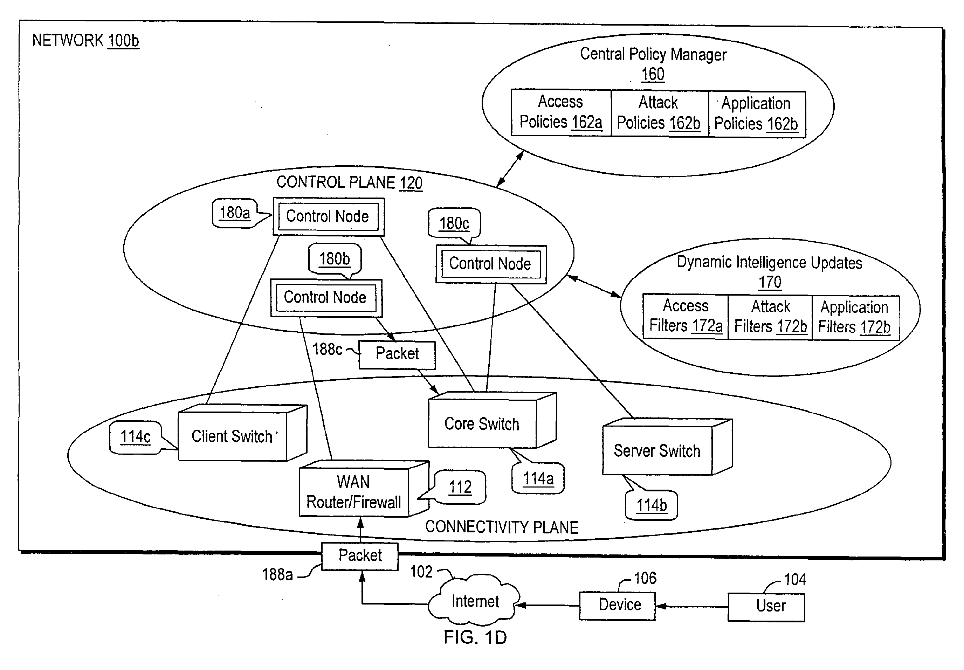

Referring to FIG. 1D, a diagram is shown illustrating one embodiment of the control plane 120. In the embodiment illustrated in FIG. 1D, the control nodes 180a-c in the control plane 120 may be implemented using a 3Com Network Control Point (NCP). For ease of illustration, the application plane 130 has been omitted from FIG. 1D.

In the embodiment illustrated in FIG. 1D, an incoming packet 188a is transmitted by a user 104 through a device 106. As described above, the packet 188a is received by router 112, which may perform network firewall functions on the packet 188a before forwarding (a partially cleansed version of) the packet 188a to control node 180a. Control node 180a performs the configured network traffic control functions on the packet 188a and produces a modified version 188c of the packet 188b, which is transmitted to core switch 114a. Modified packet 188c may be the same as or different from the original packet 188a.

As illustrated by the example of FIG. 1D, the control node 180a may be deployed as a bump-in-the-wire at strategic points in the network 100b. These points include, for example, the distribution layer and behind-WAN routers. In cases where the legacy distribution switch or router is left in place, the control node 180a may be deployed as a standalone appliance. Alternatively, for example, the control node 180a may be integrated into a chassis capable of housing connectivity and control plane blades. In either case, the control node 180a may remain a bump-in-the-wire with respect to the architecture of the connectivity plane 110b. As such, it can be bypassed and the connectivity plane 110b will continue to operate, albeit without the services provided by the control node 180a.

Returning to the access control performed in step 310, the control node 180a may be used to provide uniform access control for local and remote users. For example, the user 104 may connect over a WAN to the control node 180a, which in the embodiment of FIG. 1D is located at the logical perimeter of the network 100b. The user 104 and device 106 may connect to the control node 180a using, for example, wired or wireless Ethernet ports. The control node 180a performs access control (step 310) on the packet 188a before transmitting it to the connectivity plane 110b, such that the modified packet 188c is only forwarded to the connectivity plane 110b if the packet 188c has satisfied the access control requirements: The control node 180a may, for example, perform access control using access policies 162a maintained by a central policy manager 160 accessible to all of the control nodes 180a-c in the control plane 120. The access policies 162a may include policies to audit and control access to the network 100b based on user identity, device state, login location, time of day; and other classification criteria, thereby providing uniform access security.

The access policies 162a may perform access control by identifying each endpoint requesting network access, checking the health of the device 106, and then quarantining it if out of policy. The policies 162a may, for example, deny access to users/devices which have not activated a personal firewall, lack the latest anti-virus updates, or have malware present. When an out-of-policy state is detected, the quarantine process may notify the end user 104 and/or device 106 that it has been quarantined and may redirect the device 106 to a location where it can self-remediate. Once the device 106 is "healthy," the control node 180a may identify the user 104 through any number of established user authentication/identity management mechanisms, and then use the centralized policy manager 160 to determine which network destinations and applications the end user 104 has the right to access. Access control policies 162a may be set at the individual, group, department, or entire organization level - providing the ability, for example, to treat CEO violations one way, and finance department violations another way.

If access control succeeds, and if it is determined in step 306 that attack control is to be performed on the packet 188 (step 314), then the control plane 120 performs attack control on the packet 188 (step 316). Attack control may, for example, be performed by the traffic control subsystem 186a of the control node 180a.

If no additional processing is needed on the packet 188 after attack control is performed (step 318), the method terminates, the packet 188 is not forwarded to any other nodes in the network 100b, and the method waits for the next packet (step 328). One situation in which additional processing may not be needed is that in which the packet 188 has failed to satisfy the requirements of attack control. Alternatively, for example, the method may perform other actions in this case, such as sending an alert to the user 104.

In general, the term "attack control" refers herein to the removal of malicious and other unwanted traffic from the network 100b. Attack control includes, for example: (1) attacks, such as DDoS (Distributed Denial of Service), vulnerability (e.g., worms), exploits (e.g., viruses, Trojans, backdoors), malware detection and blocking, behavioural anomaly awareness and protection; and (2) data theft/damage, such as policy-based access control.

Attack control may be performed in any of a variety of ways. For example, in the embodiment of FIG. 1D, the control node 180a may use the attack policies 162b at the central policy manager 160 to perform attack control. Such policies 162b may, for example, include policies for performing deep packet inspection to identify patterns that indicate a possible threat. One or more filters may be applied to the identified applications and users. An appropriate policy-driven action may then be applied based on the results of applying the filter. For example, the packet 188 may be quarantined based on the results of applying the filter. The results of the filter may also be used to perform application control. For example, a priority may be assigned to the packet 188 based on the results of applying the filter.

Attack control may include segmenting the network 100b into discrete "security zones." Using this approach, any attack, e.g., a worm on an infected laptop, is only allowed to propagate within the discrete zone in which it originates, since the control node 180a blocks the attack from further transmission. Depending on customer deployment preference, a zone may be as fine-grained as each and every access port.

If attack control succeeds, and if it is determined in step 306 that application control is to be performed on the packet 188 (step 320), then the control plane 120 performs application control on the packet 188 (step 322). Attack control may, for example, be performed by the traffic control subsystem 186a of the control node 180a.

Application control may include, for example: (1) automatic discovery and QoS handling of mission critical applications (e.g., SAP, Oracle, Backup), real-time applications (e.g., VoIP, video), best effort applications (e.g., web browsing), and low-priority applications (e.g., P2P); (2) traffic visualization; (3) application performance monitoring and alerting; and (4) application fingerprinting. Application control may, for example, be used to ensure that business-critical applications have priority over less-critical applications, such as by providing latency-sensitive applications, such as voice and video, with higher priority (or by reserving bandwidth for such applications) so that listening and viewing quality is not compromised. Application control may, for example, provide unrecognised or bandwidth-intensive peer-to-peer applications with low priority.

Application control may provide visibility to what is running on the network at the application level and then prioritise and optimise traffic in accordance with business policies. Deep packet inspection may be used to continually monitoring network traffic, thereby allowing users to see what applications are running on their network, inventory end-systems, and enforce compliance with corporate policy to detect illegal servers and block access to those servers.

Application control may be implemented using techniques similar to those used to implement attack control. For example, the attack policies 162b may define filters that recognize attacks (e.g., the Blaster worm) and take action on the corresponding flow (block the attack). Application control may extend this capability by using the application policies 162c to define using filters that recognize and classify applications, and subsequently prioritise and optimise the corresponding flow. For example, the application policies 162c may define a filter that recognizes voice applications, marks packets as mission-critical using the 802.1p and/or DiffServ bits, and forward-caches web page objects - thereby creating sub-second application response time for users located in remote locations. The connectivity plane 110b may then be used to enforce the QoS prioritisation specified by the application policies 162c.

Marking mission-critical traffic with high-priority QoS tags also provides considerable protection against zero-day attacks. A zero-day attack exploits a software vulnerability that was previously unknown. Since it is unknown, the application policies 162a may not recognize the exploit, but because it is not recognized, the control node 180a may relegate the traffic to a rate-shaped best-effort class of service. Since mission-critical traffic is marked with a higher-priority QoS, the connectivity plane 110b will automatically give preferential treatment to the mission-critical traffic over the best-effort traffic. In many cases, this can prevent a zero-day worm (a worm exploiting an unknown vulnerability) from impacting mission-critical applications, such as payroll, e-commerce, and VoIP. This approach to attack control may be particularly useful in the security market, and demonstrates the synergy of handling flow classification and enforcement in a single node with policies that utilize attack and application control capabilities.

The method determines whether the packet 188 should be discarded based on the results of performing application control on the packet 188 (step 324). The method may, for example, decide to discard the packet 188 if the packet 188 has failed to satisfy the requirements of one or more of access control and attack control. If the method decides to discard the packet 188, the method terminates, the packet 188 is not forwarded to any other nodes in the network 100b, and the method waits for the next packet (step 328). Otherwise, the control node handling the packet forwards the packet 188 (step 326). For example, in the case of the packet 188a received by the control node 180b, the control node 180b forwards the packet 188a to the core switch 114a if the packet 188a satisfies all of the configured control functions that have been applied to it.

Although the embodiment illustrated in FIG. 3 shows all three of access control (step 310), attack control (step 316), and application control (step 322) being performed, this is not a requirement of the present invention. Rather, as described above, any combination of access, attack, and application control may be performed. In general; the packet 188 is only forwarded (step 326) if the packet 188 satisfies the requirements of all of the configured network traffic control functions.

Various combinations of access, attack, and application control may, however, provide synergistic effects. For example, access control and attack control may work cooperatively to protect networks not just on entry, but for the duration of a device's network connection. Access control and application control may interlock to extend access control to specific applications based on user privileges and service level agreements. These mechanisms may combine forces to enable attack filter deployment to be tuned to specific applications - ensuring maximum attack control performance and minimum false positive risk. This control synergy not only makes intuitive sense, it significantly reduces network control complexity and total cost of ownership.

As further examples, the inventory data gathered by application control provides a database of network resources, which can be used to help define access policies. The prioritisation of mission-critical and real-time traffic makes the network resilient against zero-day attacks, since the unclassified attack traffic will be given default (best-effort) priority within the connectivity plane.

As mentioned above, the control plane 120 may perform the configured network functions substantially exclusively within the network 100b. For example, the connectivity plane 110 may include a plurality of network nodes communicatively linked by at least one network interconnect device (e.g., at least one router and/or layer 2/3 switch).

The plurality of network traffic control functions may include at least two of access control, application control, and attack control. The network 100b may be configured to perform the configured network traffic control functions on network traffic flowing into the control plane 120 from the connectivity plane 110 substantially exclusively using the control nodes 180a-c. For example, the connectivity plane 110 may lack components for performing the configured network traffic control functions.

Alternatively, for example, the connectivity plane 110 may include components which are capable of performing the configured network traffic control functions, but all or substantially all of those components may be configured not to perform the configured network traffic control functions, opting instead to use one common method provided by the control plane 120.

The control plane 120 may be deployed (installed) in the network 100a (FIG. 1A), thereby producing the network 100b (FIG. 1B), without modifying the connectivity plane 110 and without disabling network interconnect devices (e.g., routers 112 and switches 114) in the connectivity plane 110. Similarly, the control plane 120 may be deployed in the network 100a without modifying the application plane 130 (e.g., without modifying any of the applications 132a-b and 134a-b executing in the application plane 130).
However, when the control plane 120 is deployed (installed) in the network 100a, at least a subset of the network interconnect devices in the connectivity plane 110 may be configured not to perform the configured network traffic control functions. One benefit of deploying the control plane 120 in this manner is that it enables the control plane 120 to perform the configured network traffic control functions substantially exclusively within the network 100b with minimal disruption to the network 100b.

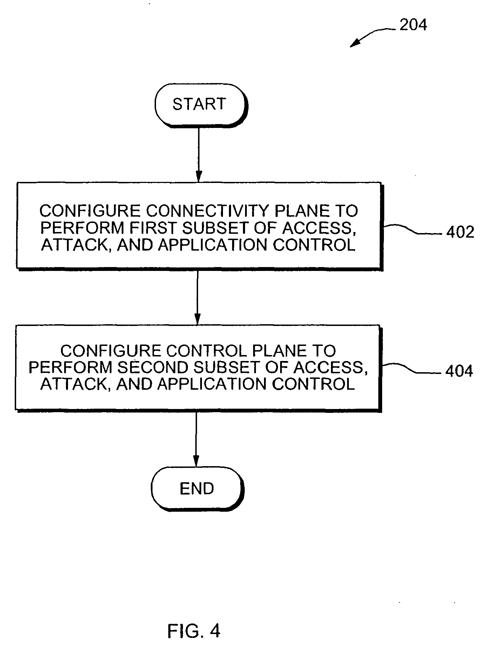

Responsibility for performing network traffic control functions may be divided between the control plane 120 and the connectivity plane 110 in a variety of ways: For example, referring to FIG. 4, a flowchart is shown of a method that is performed in one embodiment of the invention to implement step 204 of FIG. 2 (configuring the control plane 120 to perform the configured network traffic control functions). The connectivity plane 110 is configured to perform a first subset of access control, attack control, and application control on network traffic received by the connectivity plane 110 (step 402).

The control plane 120 may be installed in the network 100a and configured to perform a second subset of access control, attack control, and application control on network traffic received by the control plane 120 (step 404). The first and second subsets may be chosen to be mutually exclusive, so that the connectivity plane 110 is not configured to perform the second subset of network traffic control functions As a result, the connectivity plane 110 and the control plane 120 perform mutually-exclusive network traffic control functions on the network traffic they receive.

The "division of labour" between connectivity plane 110 and control plane 120 may be subdivided at any level of granularity. For example, the control plane 120 may perform any one of access, attack, and application control substantially exclusively of the connectivity plane. Alternatively, however, the control plane 120 may perform a portion of access control, while the connectivity plane 110 performs another portion of access control. For example, in the embodiment illustrated in FIG. 1B, the control plane 120 performs QoS filtering (a portion of application control), while the server switch 114b in the connectivity plane 110 performs load balancing (another portion of application control).

Furthermore, the control plane 120 may, for example, be deployed only within a subset of the network 100b. For example, the network 100b may be divided into different zones, and the control plane 120 may be deployed within some of those zones but not others.

The zones in which the control plane 120 is not deployed may remain unchanged. For example, the control plane 120 may perform the configured network control functions substantially exclusively within the zone(s) in which the control plane 120 is deployed, but not in other zones of the network 100b.

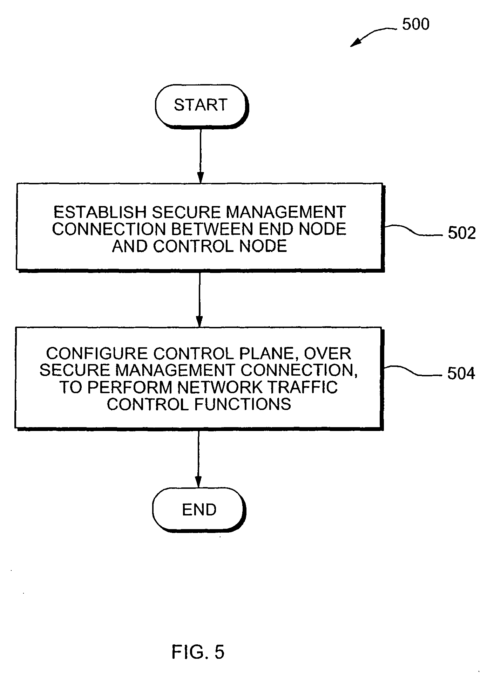

The control plane 120 may also be used to configure a secure management connection, as illustrated by the method 500 of FIG. 5. For example, a secure management connection may be established between an end node in the network 100b (such as the device 106) and one of the control nodes 180a-c in the control plane 120 (step 502). The end node may configure the control plane 120, over the secure management connection, to perform, substantially exclusively throughout the network 100b, a plurality of network traffic control functions on network traffic received by the control plane 120 (step 504).

The plurality of network traffic control functions may include, for example, at least two of network access control, application traffic control, and attack control. As with the other examples described above, the control plane 120 may be configured without modifying the connectivity plane 110 and without disabling network interconnect devices in the connectivity plane 110.

The control plane 120 may provide a console through which the user 104 of the end node may configure the control plane 120. The user 104 may also use the console to monitor access, visualize traffic flows, and be alerted to attacks and behavioural anomalies.

Referring again to FIG. 1D, a dynamic intelligence update subsystem 170 may be provided which includes updated access filters 172a, attack filters 172b, and application filters 172c. The update subsystem 170 may update the central policy manager 160 with the latest filters 172a-c. The update subsystem 170 may, for example, be implemented using 3Com's Intelligent Network Control (INC) architecture. The update subsystem 170 may perform updates at any time, such as according to a predetermined schedule, in response to availability of new updates, or in response to a request from a network administrator. The update subsystem 170 may, for example, use 3Com Digital Vaccine® update technology to update the filters 172a-c in the update subsystem 170. The control plane 120 may thereby adapt to changes in business policy and automatically protect against the dynamically evolving device, user, threat, and application management environment.

Embodiments of the present invention have a variety of advantages, such as the following. As described above with respect to FIG. 1A, existing enterprise networks include an application plane 130 riding on a connectivity plane 110. In this environment, the connectivity plane 110 is provided with very little information about the applications whose traffic traverses the connectivity plane 110. Applications in the application plane 130 only "see" a UDP or TCP socket. The connectivity plane 110 only "sees" packets with sources and destinations, without information about the applications sending/receiving those packets.

The first significant weakness of this network architecture is that the network 100a is a best-effort environment which switches or routes all packets with equal priority. This makes it difficult or impossible to associate different levels of service with the traffic of different applications, despite the desirability of doing so. Although quality of service (QoS) mechanisms exist, they are rarely used due to the complexity of applying them and the lack of mechanisms for ensuring the trustworthiness of QoS stamps. For example, in the absence of a secure management connection, if a device provides a QoS stamp over a non-secure connection, the QoS stamp may not be trustworthy.

The second significant weakness of the network architecture shown in FIG. 1A is that it provides network administrators with almost no visibility into the applications 130 that are running on their network. This makes it difficult, if not impossible, to perform application control functions such as traffic visualization.

These and other weaknesses can be reduced or eliminated by introducing the control plane 120, delivered as a seamless overlay which is functionally (but not physically) inserted between the application plane 130 and connectivity plane 110. The control plane 120 may automatically classify traffic and enforce the appropriate business policies to that traffic as it is delivered to the connectivity plane 110.

The control plane 120 may be deployed between the connectivity plane 110 and the application plane 130 without requiring any modifications to the routers 112 and switches 114 in the connectivity plane 110, or to the applications in the application plane 130. The control plane 120 may be implemented using nodes deployed as "bumps-in-the-wire" on top of any connectivity plane 110, regardless of brand, vintage, or mix. As such, if the control plane 120 is bypassed, the basic IP connectivity plane 110 may remain functional and intact.

The bi-planar network architecture disclosed herein therefore accomplishes its objectives without disrupting the existing connectivity plane 110 of switches 114 and routers 112, without altering applications 130, and without requiring yet another forklift upgrade and replacement of existing network investment.

Furthermore, the bi-planar network architecture does not require a monolithic network design approach to address evolving network needs, an approach which is often promoted by vendors but which violates sound engineering design principles and leads to vendor lock-in and stifled innovation. Rather, the bi-planar network architecture is characterized by an open ecosystem approach in which best of breed security and application control innovation can thrive - achieving higher customer value with lower cost and complexity.

The control plane 120 may be implemented using an extensible open platform that can host third-party applications. For example, it may accommodate a third-party client health, ID management, content security, or intrusion prevention solution. Such functions may be integrated into the framework of the NCP. This openness allows enterprise customers to utilize best of breed access, attack, and application control, or other control functions freely as opposed to being forced into a vendor-controlled solution environment. Service providers may create custom applications and management support - enabling the delivery of unique differentiated services based on innovation, market segment need, and competitive forces.

The bi-planar network architecture enables high visibility into, and control of, who is using the network, what devices are accessing the network, the nature and health of all traffic on the network, and the ability to prioritise that traffic in conjunction with stated business priorities and policies.

The bi-planar network architecture provides enterprise network operators with complete control of each and every device and user entering the network, thereby significantly reducing the risk of network, resource, or information theft, damage, or misuse. This access control is delivered in a common, cost-effective manner across all forms of access, regardless of device type, local or remote access location, wired or wireless access protocol. Furthermore, once devices and users are attached to the network, each and every traffic flow is continually monitored for malicious and unwanted traffic, which is actively filtered out by industry-leading IPS-based Attack Control.

With a completely secure network, IT can turn its full attention to the value added work of ensuring mission critical applications are treated with business-driven, policy-enforced priority and optimisation. With complete convergence of voice, data, and video onto a single IP infrastructure, tremendous communication and advancements can occur - propelling business productivity and customer satisfaction to new levels - but this is all for naught if voice isn't handled with appropriate latency; vital supply chain and manufacturing control transactions aren't able to be accelerated; and mobile, globally-distributed workers' and extranet partners' application response times are poor. Bi-planar application control addresses these needs by performing the difficult and dynamic work of classifying and enforcing business policy, and optimising each and every traffic flow such that the connectivity plane 110 can do what it does best - move packets from one location to another.

These and other features of the bi-planar network architecture may provide bottom-line business benefits. For example, the bi-planar network architecture may facilitate business continuity by enabling systems to stay up and running, transactions to continue to be conducted, company reputation to remain intact, and the company to stay in compliance with regulatory requirements.

The bi-planar network architecture may facilitate improved productivity by providing better network and application performance, reduced strain on IT staff with automated processes, and improved effectiveness with advanced converged application.

The bi-planar network architecture may produce a reduction in capital and operating expenses. Capital expenditures may be reduced due to improved network efficiency through increased control. For example, application control protects mission-critical traffic and reduces network over-engineering, convergence, and the filtering out of malicious and rogue traffic. Operating expenses may be reduced due to the decrease in resources needed to manage separate data, voice, and video networks, investigate attacks, clean up after attacks, ad-hoc patching, and general reactionary behaviour.

Embodiments of the bi-planar network architecture may be easy to deploy because they may be deployed as an overlay to existing networks, without requiring a forklift, upgrade. As a result, organizations may find the adoption of embodiments of the bi-planar network architecture seamless and cost-effective, and less risky because deployment of the control plane 120 keeps the existing connectivity plane 110 intact.

It is to be understood that although the invention has been described above in terms of particular embodiments, the foregoing embodiments are provided as illustrative only, and do not limit or define the scope of the invention. Various other embodiments, including but not limited to the following, are also within the scope of the claims. For example; elements and components described herein may be further divided into additional components or joined together to form fewer components for performing the same functions.

In certain embodiments described herein the configured network control functions are required to include access control. This is not, however, a requirement of all embodiments of the present invention. Rather, in certain embodiments of the present invention, the configured network control functions may include any one or any combination of access control, attack control, and application control.

The control plane 120 may be implemented in any of a variety of ways. For example, the control plane 120 may include one or more network control devices, each of which is suitable for installation in an electronic communication network including a plurality of network nodes communicatively linked by at least one network interconnect device (such as a router or layer 2/3 switch). The network control device may include, in a unitary assemblage, input/output means for communicatively linking the network control device to the electronic communication network, power supply means for supplying power to the network control device, and logic and processing circuitry configurable to perform network traffic control functions on traffic flowing into the network control device through the input/output means, the network traffic control functions including network access control and either: (1) application traffic control, (2) attack control, or (3) both application traffic control and attack control.

The techniques described above may be implemented, for example, in hardware, software, firmware, or any combination thereof. The techniques described above may be implemented in one or more computer programs executing on a programmable computer including a processor, a storage medium readable by the processor (including, for example, volatile and non-volatile memory and/or storage elements), at least one input device, and at least one output device. Program code may be applied to input entered using the input device to perform the functions described and to generate output. The output may be provided to one or more output devices.

Each computer program within the scope of the claims below may be implemented in any programming language, such as assembly language, machine language, a high-level procedural programming language, or an object-oriented programming language. The programming language may, for example, be a compiled or interpreted programming language.

Each such computer program may be implemented in a computer program product tangibly embodied in a machine-readable storage device for execution by a computer processor. Method steps of the invention may be performed by a computer processor executing a program tangibly embodied on a computer-readable medium to perform functions of the invention by operating on input and generating output. Suitable processors include, by way of example, both general and special purpose microprocessors. Generally, the processor receives instructions and data from a read-only memory and/or a random access memory. Storage devices suitable for tangibly embodying computer program instructions include, for example, all forms of non-volatile memory, such as semiconductor memory devices, including EPROM, EEPROM, and flash memory devices; magnetic disks such as internal hard disks and removable disks; magneto-optical disks; and CD-ROMs. Any of the foregoing may be supplemented by, or incorporated in, specially-designed ASICs (application-specific integrated circuits) or FPGAs (Field-Programmable Gate Arrays). A computer can generally also receive programs and data from a storage medium such as an internal disk (not shown) or a removable disk. These elements will also be found in a conventional desktop or workstation computer as well as other computers suitable for executing computer programs implementing the methods described herein, which may be used in conjunction with any digital print engine or marking engine, display monitor, or other raster output device capable of producing colour or grey scale pixels on paper, film, display screen, or other output medium.

## Claims

1. A method of consolidating control in an electronic communication network (100b), the method comprising:
(A) deploying at least one control node (180a) in the network, the control node comprising means for inspecting packets (188) received by the control node; and
(B) configuring the control node to perform network traffic control functions on the packets received by the control node before transmitting the packets to any other node in the network, wherein the network traffic control functions include network access control and either: (1) application control, (2) attack control, or (3) both application traffic control and attack control.

2. A method according to claim 2, wherein (B) comprises configuring the network to perform the network traffic control functions substantially exclusively in the control node.

3. A method according to claim 2, wherein the network comprises at least one network interconnect device (112, 114) not configured to perform the network traffic control functions.

4. A method according to claim 3, wherein the at least one network interconnect device comprises a layer 2 switch.

5. A method according to claim 3 or 4, wherein the at least one network interconnect device comprises a layer 3 switch.

6. A method according to any of claims 3 to 5, wherein the at least one network interconnect device comprises a router (112).

7. A method according to any foregoing claim, wherein network access control comprises controlling initial connection of a device to the electronic communication network and revoking access of the device to the electronic communication network if the device engages in unauthorized behaviour.

8. A method for use with an electronic communication network, the method coinprising:
(A) receiving a packet at a control node (180a) in the network; and
(B) at the control node, performing network traffic control functions on the packet received by the control node without transmitting the packet to any other node in the network, the network traffic control functions including network access control and either: (1) application control, (2) attack control, or (3) both application control and attack control.

9. A method according to claim 8, further comprising:
(C) after (B), transmitting the packet to another node in the network.

10. An electronic communication network comprising:
a first node;
a control node (180a) comprising:
means for inspecting network traffic received by the control node; and
means for performing network traffic control functions on the network traffic received by the control node before transmitting the network traffic to the first node, the network traffic control functions including network access control and either: (1) application control, (2) attack control, or (3) both application control and attack control.

11. A network according to claim 10, wherein the means for performing network traffic control functions comprises means for performing the network traffic control functions without transmitting the network traffic to any other node in the network.

12. A network according to claim 11, further comprising means for transmitting the network traffic to the first node after the means for performing the network traffic control functions performs the network traffic control functions:

13. A network control device, suitable for installation in an electronic communication network, comprising a plurality of network nodes (180a - 180c) communicatively linked by at least one network interconnect device (114a), the network control device comprising, in a unitary assemblage:
(a) input/output means for communicatively linking the network control device to said electronic communication network;
(b) a power supply means for supplying power to the network control device; and
(c) logic and processing circuitry configurable to perform network traffic control functions on traffic flowing into the network control device through the input/output means, the network traffic control functions including network access control and either: (1) application control, (2) attack control, or (3) both application control and attack control.

14. A network control device according to claim 13, wherein the logic and processing circuitry comprises means for performing the network traffic control functions on the traffic without transmitting the traffic to any other device in the network.

15. A network control device according to claim 14, further comprising means for transmitting the traffic to another node in the network after the logic and processing circuitry performs the network traffic control functions on the traffic.

16. An electronic communication network comprising:
a plurality of network nodes communicatively linked by at least one network interconnect device (112,114);
at least one control node (180a), the or each control node comprising:
means for receiving network traffic from the at least one network interconnect device; and
means for inspecting the received network traffic; and
means for performing a plurality of network traffic control functions on the received network traffic, said plurality of network traffic control functions including at least two of network access control, application control, and attack control, wherein said plurality of network traffic control functions is performed substantially exclusively by said at least one control node throughout said electronic communication network.

17. A network according to claim 16, wherein the network interconnect device comprises at least one layer 2 switch.

18. A network according to claim 16 or 17, wherein the network interconnect device comprises at least one layer 3 switch.

19. A network according to any of claims 16 to 18, wherein the network interconnect device comprises at least one router.

20. A network according to any of claims 16 to 19, wherein network access control comprises controlling initial connection of a device to the electronic communication network and revoking access of the device to the electronic communication network if the device engages in unauthorized behaviour.

21. An electronic communication network comprising:
a connectivity plane (110b) comprising at least one network interconnect device (112, 114); and
a control plane (120) comprising at least one control node (180a);
wherein the electronic communication network is configured to perform a plurality of network traffic control functions substantially exclusively in said control plane on network traffic flowing into said control plane from at least one network interconnect device, said plurality of network traffic control functions including at least two of network access control, application control, and attack control.

22. A network according to claim 21, wherein the network interconnect device comprises at least one layer 2 switch.

23. A network according to claim 21 or 22, wherein the network interconnect device comprises at least one layer 3 switch.

24. A network according to any of claims 21 to 23, wherein the network interconnect device comprises at least one router.

25. A method for use with an electronic communication network, the network comprising a connectivity plane (110b), the method comprising:
(A) installing a control plane (120) in the network;
(B) configuring the control plane to perform a plurality of network traffic control functions on network traffic received by the control plane, the plurality of network traffic control functions including at least two of network access control, application control, and attack control;
wherein (A) and (B):
are performed without modifying the connectivity plane;
are performed without disabling network interconnect devices in the connectivity plane; and
include configuring a subset of the network interconnect devices in the connectivity plane not to perform the plurality of network traffic control functions.

26. A method according to claim 25, wherein the network further comprises an application plane (130), and wherein (A) and (B) are performed without modifying the application plane.

27. A method for use with an electronic communication network, the network comprising a connectivity plane (110b) configured to perform a first plurality of network traffic control functions, the method comprising:
(A) installing a control plane (120) in the network;
(B) configuring the control plane to perform a second plurality of network traffic control functions on network traffic received by the control plane, the second plurality of network traffic control functions including at least two of network access control, application traffic control, and attack control; and
(C) configuring the connectivity plane not to perform the second plurality of network traffic control functions.

28. A method according to claim 27, wherein the network further comprises an application plane (130), and wherein (A) and (B) are performed without modifying the application plane.

29. A method for use with an electronic communication network, the network comprising a connectivity plane (110b), the method comprising:
(A) installing a control plane (120) in the network; and
(B) configuring the control plane to perform, substantially exclusively throughout the electronic communication network, a plurality of network traffic control functions on network traffic received by the control plane, the plurality of network traffic control functions including at least two of network access control, application control, and attack control.

30. A method according to claim 29, wherein (B) comprises configuring the control plane (120) without modifying the connectivity plane.

31. A method according to claim 29 or 30, wherein (B) comprises configuring the control plane (120) without disabling network interconnect devices in the connectivity plane.

32. A method according to any of claims 29 to 31, wherein (B) comprises configuring a subset of network interconnect devices in the connectivity plane not to perform the plurality of network traffic control functions.

33. A method for use with an electronic communication network, the network comprising a connectivity plane (110b) and a control plane (120), the method comprising:
(A) establishing a secure management connection in the network with the control plane; .
(B) configuring, over the secure management connection, the control plane to perform, substantially exclusively throughout the electronic communication network, a plurality of network traffic control functions on network traffic received by the control plane, the plurality of network traffic control functions including at least two of network access control, application control, and attack control.

34. A method according to claim 33, wherein (B) comprises configuring the control plane (120) without modifying the connectivity plane.

35. A method according to claim 33 or 34, wherein (B) comprises configuring the control plane (120) without disabling network interconnect devices in the connectivity plane.
